(19) Europäisches Patentamt
European Patent Office
Office européen des brevets

(11) EP 3 796 429 B1

(12) # EUROPEAN PATENT SPECIFICATION

(45) Date of publication and mention of the grant of the patent:
**28.06.2023 Bulletin 2023/26**

(21) Application number: **19900302.1**

(22) Date of filing: **25.11.2019**

(51) International Patent Classification (IPC):
***H01M 4/134*** *(2010.01)* ***H01M 4/38*** *(2006.01)*
***H01M 4/62*** *(2006.01)* ***H01M 10/052*** *(2010.01)*
*H01M 4/36* *(2006.01)* *H01M 4/02* *(2006.01)*

(52) Cooperative Patent Classification (CPC):
**H01M 4/382; H01M 4/134; H01M 4/366; H01M 4/62; H01M 4/622; H01M 4/623; H01M 10/052;** H01M 2004/027; H01M 2300/0082; Y02E 60/10

(86) International application number:
**PCT/CN2019/120597**

(87) International publication number:
**WO 2020/125331 (25.06.2020 Gazette 2020/26)**

(54) **LITHIUM METAL BATTERY**

LITHIUM-METALL-BATTERIE

BATTERIE AU LITHIUM-MÉTAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2018 CN 201811543809**

(43) Date of publication of application:
**24.03.2021 Bulletin 2021/12**

(73) Proprietor: **Contemporary Amperex Technology Co., Limited**
**Jiaocheng District**
**Ningde**
**Fujian 352100 (CN)**

(72) Inventors:
- **LI, Lihong**
  **Ningde, Fujian 352100 (CN)**
- **LIU, Chengyong**
  **Ningde, Fujian 352100 (CN)**

(74) Representative: **Gong, Jinping**
**CocreateIP**
**Eggenfeldenerstraße 56**
**81929 München (DE)**

(56) References cited:

| | |
|---|---|
| **EP-A1- 3 244 471** | **EP-A1- 3 384 541** |
| **EP-A1- 3 386 008** | **CN-A- 105 074 968** |
| **CN-A- 105 556 730** | **CN-A- 107 359 309** |
| **CN-A- 108 292 727** | **CN-A- 108 886 139** |
| **US-A1- 2016 226 097** | **US-A1- 2016 372 743** |

- **"A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoParticleCharacterization(2)_1962085150.pdf**
- **Nicolas Fedelich: "Application Handbook Thermal Analysis of Polymers Selected Applications Thermal Analysis", , 1 January 2013 (2013-01-01), XP055608279, Retrieved from the Internet: URL:https://www.mt.com/dam/LabDiv/guides-glen/ta-polymer/TA_Polymers_Selected_Apps_EN.pdf [retrieved on 2019-07-24]**
- **Thomas: "GPC/SEC Practical Tips and Tricks", , 1 October 2011 (2011-10-01), XP055608344, Retrieved from the Internet: URL:https://www.agilent.com/cs/library/slidepresentation/Public/GCC2011-Wksp_GPC_Tip s-and-Tricks_Presentation.pdf [retrieved on 2019-07-24]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 796 429 B1

- Prof Premamoy Ghosh: "POLYMER SCIENCE FUNDAMENTALS OF POLYMER SCIENCE Molecular Weights of Polymers CONTENTS Introduction Concept of Average Molecular Weight Number Average Molecular Weight Membrane Osmometry Weight Average Molecular Weight Assessment of Shape of Polymer Molecules Viscosity Average Molecular Weight Gener", , 21 September 2006 (2006-09-21), XP055608363, Retrieved from the Internet: URL:http://nsdl.niscair.res.in/jspui/bitstream/123456789/406/2/Molecular%20weights%20of%20polymers.pdf [retrieved on 2019-07-24]
- Eunice K Wong ET AL: "Battery Separator Characterization and Evaluation Procedures for NASA's Advanced Lithium-Ion Batteries", , 1 May 2010 (2010-05-01), XP055608606, Retrieved from the Internet: URL:https://ntrs.nasa.gov/archive/nasa/casi.ntrs.nasa.gov/20100021170.pdf
- R Brdicka ET AL: "Surface area and pore size determination Modern Methods in Heterogeneous Catalysis Research", Handbook of Heterogeneous Catalysis, VCH, Weinheim Handbook of Porous Solids, 1 January 2004 (2004-01-01), XP055643749, Retrieved from the Internet: URL:http://www.fhi-berlin.mpg.de/acnew/department/pages/teaching/pages/teaching__wintersemester__2013_2014/annette_trunschke__surface_area_and_pore_analysis__131101.pdf
- N.N.: "Mercury Intrusion Porosimetry Theory Presented by Micromeritics Instrument Corporation", , 12 July 2017 (2017-07-12), XP055763305, Retrieved from the Internet: URL:https://www.micromeritics.com/Repository/Files/Mercury_Porosemitry_Theory_poster_.pdf [retrieved on 2021-01-11]

## Description

### TECHNICAL FIELD

The present invention relates to the field of battery materials, and in particular, to a lithium metal battery as specified in any of claims 1-7.

### BACKGROUND

Currently, secondary batteries have been widely applied to consumer electronic products such as mobile phones, notebook computers, and unmanned aerial vehicles, and used as a power source of vehicles. An upper-limit energy density of a commercial lithium-ion battery based on a graphite negative electrode structure is approximately 270 Wh/kg. It is very difficult to increase the energy density of the lithium-ion battery by processing graphite. A theoretical specific capacity of metal lithium is up to 3860 mAh/g, and enables an electrode potential to be as low as -3.04 V (vs. $H_2/H^+$), thereby helping the energy density of a battery system to reach 500 Wh/kg. Therefore, developing a lithium secondary battery using metal lithium as a negative electrode once again attracts attention of scientific researchers.

However, inhomogeneous lithium deposition/dissolution during a cycle is a main factor that restricts further development and application of the lithium secondary battery, and is likely to give rise to a lithium dendrite that leads to a short circuit of the battery and safety problems. In addition, existence of the lithium dendrite decreases cycle performance of the battery significantly.

Therefore, how to effectively improve surface properties of a lithium metal, enhance homogeneity of lithium deposition/dissolution, and suppress formation of the lithium dendrite is essential to the further development of lithium metal batteries.

### SUMMARY

In view of problems in background technologies, an objective of the present invention is to provide a negative electrode for a lithium metal battery to solve the problems in the prior art.

To achieve the foregoing objective and other relevant objectives, the present invention provides a lithium metal battery as specified in any of the claims 1-7, including a positive electrode, a negative electrode, and an electrolyte. The negative electrode includes a lithium metal and a protective layer located on at least a part of a surface of the lithium metal. The protective layer includes a polymer X and a polymer Y The polymer X includes a polymer Z and a polymer W. The polymer Z is selected from one or more of polytetrafluoroethylene and a compound represented Formula I. The polymer W is selected from one or more of compounds represented by Formula II and Formula III. The polymer Y is selected from one or more of polyvinylidene fluoride and polyvinylidene fluoride-hexafluoropropylene:

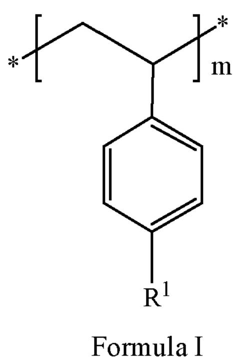

Formula I

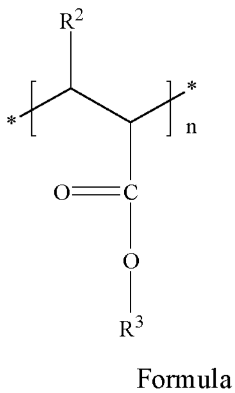

Formula II

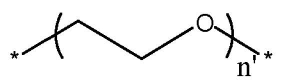

Formula III

where, 0 < m & 2500, 0 < n & 5000, 0 < n' ≤ 5000, 1:25 & 2m:n ≤ 25:1, 1:25 ≤ 2m:n' & 25:1;

$R^1$ is selected from H; branched or unbranched, saturated or unsaturated, substituted or unsubstituted C1-C20 aliphatic groups; saturated or unsaturated, substituted or unsubstituted C3-C9 cycloalkyls; $(C{=}O)OR^4$; $-SO_3R^4$; and $-PO_3R^4$; the cycloalkyls optionally include at least one heteroatom selected from S, N, P, and O as a ring member; $R^4$ is selected from H; branched or unbranched, saturated or unsaturated, substituted or unsubstituted C1-C20 aliphatic groups; and saturated or unsaturated, substituted or unsubstituted C3-C9 cycloalkyls; the cycloalkyls optionally include at least one heteroatom selected from S, N, P, and O as a ring member; in $R^1$ and $R^4$, substituents of the aliphatic groups and the cycloalkyl groups each are independently selected from C1-C6 alkyls; linear or

branched C1-C6 alkoxies; F; Cl; I; Br; $CF_3$; $CH_2F$; $CHF_2$; CN; OH; SH; $NH_2$; oxo; (C=O)R'; SR'; SOR'; $SO_2R'$; NHR'; NR'R"; SiRR'R"; SiOR'R"; $(R'O)_2(P=O)$; $(R'O)_2(P=S)$; $(R'S)_2(P=O)'$; and BR'R", where R, R', and R" of the substituents each are independently selected from linear or branched $C_{1-6}$ alkyls;

$R^2$ is selected from H and a methyl; and

$R^3$ is selected from H; branched or unbranched, saturated or unsaturated, substituted or unsubstituted C1-C20 aliphatic groups; and saturated or unsaturated, substituted or unsubstituted C3-C9 cycloalkyls; the cycloalkyls optionally include at least one heteroatom selected from S, N, P, and O as a ring member; in $R^3$, substituents of the aliphatic groups and the cycloalkyl groups each are independently selected from an aryl; C1-C6 alkyls; linear or branched C1-C6 alkoxies; F; Cl; I; Br; $CF_3$; $CH_2F$; $CHF_2$; CN; OH; SH; $NH_2$; oxo; (C=O)R'; SR'; SOR'; $SO_2R'$; NHRI. , NR'R"; SiRR'R"; SiOR'R"; $(R'O)_2(P=O)$; $(R'O)_2(P=S)$; $(R'S)_2(P=O)'$; and BR'R", where R, R', and R" of the substituents each are independently selected from linear or branched $C_{1-6}$ alkyls.

Compared with the prior art, the present invention achieves at least the following beneficial effects:

With the lithium metal battery provided in the present invention, a protective layer is disposed on the surface of the lithium metal of the negative electrode, and the protective layer includes a specific polymer. Through adjustment of a structure of the polymer, an interpenetrating polymer network structure is formed by means of a chain entanglement effect between polymers. This achieves the following benefits: (1) the protective layer forms a channel that is conducive to rapid conduction of lithium ions, and enables large-current charging and discharging; (2) the protective layer is both strong and elastic, and effectively improves homogeneity of lithium deposition/dissolution during large-current charging and discharging, and suppresses formation of dendritic lithium; and (3) reactivity between the lithium negative electrode and the electrolytic solution is reduced, thereby significantly improving cycle stability and safety performance of the lithium metal battery.

## DESCRIPTION OF EMBODIMENTS

The following describes in detail the lithium metal battery according to the present invention.

A lithium metal battery according to the present invention includes a positive electrode, a negative electrode, and an electrolyte. The negative electrode includes a lithium metal and a protective layer located on at least a part of a surface of the lithium metal. The protective layer includes a polymer X and a polymer Y The polymer X includes a polymer Z and a polymer W. The polymer Z is selected from one or more of polytetrafluoroethylene and a compound represented Formula I. The polymer W is selected from one or more of compounds represented by Formula II and Formula III. The polymer Y is selected from one or more of polyvinylidene fluoride and polyvinylidene fluoride-hexafluoropropylene:

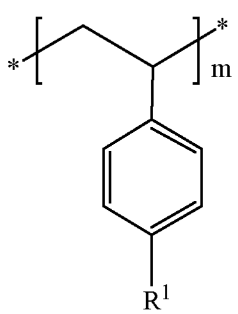

Formula I

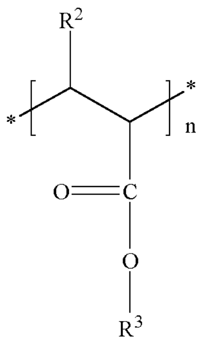

Formula II

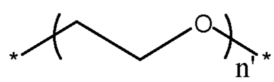

Formula III

where, 0 < m ≤ 2500, 0 < m ≤ 5, 5 ≤ m ≤ 10, 10 ≤ m ≤ 20, 20 ≤ m ≤ 50, 50 ≤ m ≤ 100, 100 ≤ m ≤ 200, 200 ≤ m ≤ 400, 400 ≤ m ≤ 600, 600 ≤ m ≤ 1000, 1000 ≤ m ≤ 1500, 1500 ≤ m ≤ 2000, or 2000 & m ≤ 2500;

0 < n ≤ 2500, 0 < n ≤ 5, 5 & n ≤ 10, 10 ≤ n & 20, 20 & n & 50, 50 & n ≤ 100, 100 ≤ n & 200, 200 ≤ n & 400, 400 ≤ n ≤ 600, 600 & n & 1000, 1000 & n ≤ 1500, 1500 & n ≤ 2000, 2000 & n ≤ 2500, 2500 & n & 3000, 3000 ≤ n & 3500, 3500 ≤ n & 4000, 4000 ≤ n & 4500, or 4500 ≤ n & 5000;

0 < n' ≤ 2500, 0 < n' ≤ 5, 5≤ n' ≤ 10, 10 ≤ n' & 20, 20 & n' & 50, 50 ≤ n' & 100, 100 ≤ n' ≤ 200, 200 ≤ n' ≤ 400, 400 & n' & 600, 600 & n' & 1000, 1000 & n' ≤ 1500, 1500 & n' ≤ 2000, 2000 & n' ≤ 2500, 2500 ≤ n' & 3000, 3000 ≤ n' & 3500, 3500 ≤ n' & 4000, 4000 ≤ n' & 4500, or 4500 ≤ n' ≤ 5000;

a polymerization degree m of the polymer Z and a polymerization degree n of the polymer W satisfy: 1:25 ≤ 2m:n ≤ 25:1, 1:25 & 2m:n & 1:20, 1:20 ≤ 2m:n ≤ 1:15, 1:15 ≤ 2m:n ≤ 1:10,1:10 ≤ 2m:n ≤ 1:5,1:5 & 2m:n & 1:3, 1:3 ≤ 2m:n ≤ 1:1, 1:1 ≤ 2m:n ≤ 1:3, 1:3 ≤ 2m:n ≤ 1:5, 1:5 ≤ 2m:n ≤ 1:10, 1:10 ≤ 2m:n ≤ 1:15, 1:15 ≤ 2m:n ≤ 1:20, or 1:20 ≤ 2m:n

≤ 1:25; and

a polymerization degree m of the polymer Z and a polymerization degree n' of the polymer W satisfy: 1:25 & 2m:n' & 25:1, 1:25 & 2m:n' & 1:20, 1:20 & 2m:n' & 1:15, 1:15 & 2m:n' & 1:10, 1:10 ≤ 2m:n' ≤ 1:5, 1:5 ≤ 2m:n' ≤ 1:3, 1:3 & 2m:n' & 1:1, 1:1 & 2m:n' & 1:3, 1:3 ≤ 2m:n' ≤ 1:5, 1:5 ≤ 2m:n' ≤ 1:10, 1:10 & 2m:n' & 1:15, 1:15 & 2m:n' & 1:20, or 1:20 ≤ 2m:n' ≤ 1:25.

$R^1$ is selected from H; branched or unbranched, saturated or unsaturated, substituted or unsubstituted C1-C20, C1-C12, or C1-C6 aliphatic groups; saturated or unsaturated, substituted or unsubstituted C3-C9 or C3-C6 cycloalkyls; (C=O)$OR_4$; -$SO_3R_4$; and -$PO_3R_4$. The cycloalkyls optionally include at least one heteroatom selected from S, N, P, and O as a ring member; or, each of the cycloalkyls is selected from a variety of saturated or unsaturated alkyls that include not more than 20 carbon atoms and that include one or more of the following elements: fluorine, chlorine, bromine, iodine, nitrogen, oxygen, sulfur, silicon, boron, and phosphorus.

$R^4$ is selected from H; branched or unbranched, saturated or unsaturated, substituted or unsubstituted C1-C20, C1-C12, or C1-C6 aliphatic groups; and saturated or unsaturated, substituted or unsubstituted C3-C9 or C3-C6 cycloalkyls. The cycloalkyls optionally include at least one heteroatom selected from S, N, P, and O as a ring member; or, each of the cycloalkyls is selected from a variety of saturated or unsaturated alkyls that include not more than 20 carbon atoms and that include one or more of the following elements: fluorine, chlorine, bromine, iodine, nitrogen, oxygen, sulfur, silicon, boron, and phosphorus.

In $R^1$ and $R^4$, substituents of the aliphatic groups and the cycloalkyl groups each are independently selected from C1-C6 alkyls; linear or branched C1-C6 alkoxies; F; Cl; I; Br; $CF_3$; $CH_2F$; $CHF_2$; CN; OH; SH; $NH_2$; oxo; (C=O)R'; SR'; SOR'; $SO_2R'$; NHR'; NR'R"; SiRR'R"; SiOR'R"; $(R'O)_2$(P=O); $(R'O)_2$(P=S); $(R'S)_2$( P=O)'; and BR'R", where R, R', and R" of the substituents each are independently selected from linear or branched $C_{1-6}$ alkyls.

$R^2$ is selected from H and a methyl; and

$R^3$ is selected from H; branched or unbranched, saturated or unsaturated, substituted or unsubstituted C1-C20, C1-C12, or C1-C6 aliphatic groups; saturated or unsaturated, and substituted or unsubstituted C3-C9 or C3-C6 cycloalkyls. The cycloalkyls optionally include at least one heteroatom selected from S, N, P, and O as a ring member; or, each of the cycloalkyls is selected from a variety of saturated or unsaturated alkyls that include not more than 20 carbon atoms and that include one or more of the following elements: fluorine, chlorine, bromine, iodine, nitrogen, oxygen, sulfur, silicon, boron, and phosphorus.

In $R^3$, substituents of the aliphatic groups and the cycloalkyl groups each are independently selected from C1-C6 alkyls; linear or branched C1-C6 alkoxies; F; Cl; I; Br; $CF_3$; $CH_2F$; $CHF_2$; CN; OH; SH; $NH_2$; oxo; (C=O)R'; SR'; SOR'; $SO_2R'$; NHR'; NR'R"; SiRR'R"; SiOR'R"; $(R'O)_2$(P=O); $(R'O)_2$(P=S); $(R'S)_2$( P=O)'; and BR'R", where R, R', and R" of the substituents each are independently selected from linear or branched $C_{1-6}$ alkyls.

In the present invention, the aliphatic groups generally include an alkyl, an alkenyl, and an alkynyl. For example, the aliphatic groups may include, but without limitation, methyl, ethyl, vinyl, ethynyl, propyl, n-propyl, isopropyl, propenyl, propynyl, butyl, n-butyl, isobutyl, sec-butyl, tert-butyl, butenyl, butynyl, pentyl, hexyl, heptyl, octyl, nonyl, and decyl.

In the present invention, the cycloalkyls generally mean saturated and unsaturated (but not aromatic) cyclic hydrocarbons, and optionally may be unsubstituted, monosubstituted, or polysubstituted. For example, the cycloalkyl may be a saturated cycloalkyl, in which, optionally, at least one carbon atom may be replaced by a heteroatom. Preferably, the heteroatom is S, N, P, or O. For another example, the cycloalkyl may be a monounsaturated or polyunsaturated (but not aromatic) cycloalkyl whose ring includes no heteroatom.

In the present invention, the aryl generally means a cyclic system group that includes at least one aromatic ring but no heteroatom. For example, the aryl may include, but without limitation, phenyl, naphthyl, fluoranthenyl, fluorenyl, tetrahydro-naphthyl, indanyl, or anthracenyl.

In the lithium metal battery provided in the present invention, an interpenetrating polymer network structure is formed between the polymer X and the polymer Y in the protective layer under a chain entanglement effect. The chain entanglement effect generally means a physical crosslinking effect formed by interactions between molecules such as chain entanglement, overlapping, penetrating, or inter-segment mobility.

In the lithium metal battery provided in the present invention, the polymer X is used to increase ionic conductivity of the protective layer, so that the protective layer has a high ionic conductivity. This is conducive to homogeneity of lithium ion concentration on the surface of the negative electrode during large-current charging and discharging, and also reduces capacity loss caused by polarization during the charging and discharging. The intensity of such a property changes an apparent morphology of a lithium deposition process. When the protective layer includes both the X polymer and the Y polymer, the protective layer is of both high conductivity and high mechanical strength. In this way, the lithium deposition/dissolution process is synergistically controlled by an electric field and mechanics to achieve homogeneity of lithium deposition/dissolution and enhance battery performance.

In some implementations of the present invention, the polymer Z and the polymer W may be polymer blends. The polymer blends generally mean that the polymer Z and the polymer W are physically blended.

In some implementations of the present invention, the polymer Z and the polymer W may also be copolymerized polymers. The copolymerized polymers generally mean that a monomer corresponding to the polymer Z is copolymerized with a monomer corresponding to the polymer W to form a copolymer. In the formed copolymer, a first block may correspond to the polymer Z, and accordingly a second block may correspond to the polymer W. Preferably, a structure of the copolymer of the polymer Z and the polymer W may be, but without limitation, Poly(Z-c-W), Poly(Z-b-W), or Poly(Z-b-W-b-Z). Poly(Z-c-W) generally means an atactic polymer formed by the monomer corresponding to the polymer Z and the monomer corresponding to the polymer W. Poly(Z-b-W) generally means a diblock copolymer formed by the polymer Z serving as a first block and the polymer W serving as a second block. Poly(Z-b-W-b-Z) generally means a triblock copolymer formed by the polymer Z serving as a first block and a third block and the polymer W serving as a second block, where c generally indicates that the monomers in the polymer are randomly polymerized, and b generally indicates that a block exists between the monomers.

In some implementations not being part of the present invention, the number-average molecular weight of the polymer Y may be 100,000-2,000,000, 100,000-1,000,000, 100,000-200,000, 200,000-300,000, 300,000-400,000, 400,000-500,000, 500,000-600,000, 600,000-700,000, 700,000-800,000, 800,000-900,000, 900,000-1,000,000, 1,000,000-1,200,000, 1,200,000-1,400,000, 1,400,000-1,600,000, 1,600,000-1,800,000, or 1,800,000-2,000,000, preferably, 100,000-1,000,000.

In some implementations not being part of the present invention, the number-average molecular weight of the polymer Z may be 5,000-1,000,000, 20,000-1,000,000, 5,000-10,000, 10,000-20,000, 20,000-50,000, 50,000-100,000, 100,000-200,000, 20,000-400,000, 400,000-600,000, 600,000-800,000, or 800,000-1,000,000, preferably, 20,000-1,000,000.

In some implementations not being part of the present invention, the number-average molecular weight of the polymer W may be 5,000-1,000,000, 20,000-500,000, 5,000-10,000, 10,000-20,000, 20,000-50,000, 50,000-100,000, 100,000-200,000, 20,000-300,000, 300,000-400,000, or 400,000-500,000, preferably, 20,000-500,000.

In some implementations of the present invention, the polymer Y may be, but without limitation, one or more of polyvinylidene fluoride (PVDF) and polyvinylidene fluoride-hexafluoropropylene (PVDF-HFP).

In some implementations not being part of the present invention, a glass transition temperature of the polymer Z satisfies 50 °C~120 °C, 50 °C~60 °C, 60 °C~70 °C, 70 °C~80 °C, 80 °C~90 °C, 90 °C~100 °C, 100 °C~110 °C, or 110 °C~120 °C.

In some implementations of the present invention, preferably, the polymer Z may be one or more of polytetrafluoroethylene, polystyrene, polyphenylene ether, and polymethylstyrene.

In some implementations of the present invention, the polymer W may be a homopolymer or a copolymer formed by one or more of polyethylene oxide, polymethyl acrylate, polyethyl acrylate, poly(n-propyl acrylate), polyisopropyl acrylate, poly(n-butyl acrylate), polyisobutyl acrylate, poly(n-pentyl acrylate), poly(n-hexyl acrylate), poly(2-ethylhexyl acrylate), hydroxyethyl n-acrylate, poly(hydroxypropyl acrylate), n-butyl methacrylate, poly(n-pentyl methacrylate), poly(n-hexyl methacrylate), poly(n-octyl methacrylate), and poly(hydroxypropyl methacrylate).

A person skilled in the art may select an appropriate number-average molecular weight of the copolymer of the polymer W and the polymer Z according to types and physical and chemical properties of the polymer W and the polymer Z. For example, the number-average molecular weight of the copolymer of the polymer W and the polymer Z may be 5,000-1,000,000, 5,000-10,000, 10,000-20,000, 20,000-40,000, 40,000-60,000, 60,000-80,000, 80,000-100,000, 100,000-200,000, 200,000-400,000, 400,000-600,000, 600,000-800,000, or 800,000-1,000,000. Further, a person skilled in the art may, according to the types, the physical and chemical properties, and parameters such as a molecular weight of the polymer Z and the polymer W, adjust a length of the monomer corresponding to the polymer Z and a length of the monomer corresponding to the polymer W in a block copolymer, and a ratio between the lengths. For example, the quantity m of monomers corresponding to the polymer Z and the quantity n or n' of monomers corresponding to the polymer W may satisfy such a ratio relationship.

In the lithium metal battery provided in the present invention, a ratio of W to Z may affect elasticity of the protective layer, and a percentage of the mass of Y in a total mass of the protective layer may affect strength of the protective layer. A person skilled in the art may adjust the percentage of the polymer Y and/or the polymer Z and/or the polymer W in the protective layer according to an application environment of the protective layer.

In some implementations of the present invention, the mass ratio of the polymer W to the polymer Z may be 1:9~9:1, 3:7~7:3, 1:9~1:7, 1:7~1:5, 1:5~1:3, 1:3~3:7, 3:7~1:2, 1:2~2:3, 2:3~1:1, 1:1~2:3, 2:3~1:2, 1:2~3:7, 3:7~1:3, 1:3~1:5, 1:5~1:7, or 1:7~1:9, preferably, 3:7~7:3.

In some implementations of the present invention, a mass percentage of the polymer Y in the protective layer may be 10 wt%-90 wt%, 40 wt%-90 wt%, 10 wt%~15 wt%, 15 wt%-20 wt%, 20 wt%-25 wt%, 25 wt%-30 wt%, 30 wt%-35 wt%, 35 wt%~40 wt%, 40 wt%~45 wt%, 45 wt%~50 wt%, 50 wt%-55 wt%, 55 wt%~60 wt%, 60 wt%-65 wt%, 65 wt%-70 wt%, 70 wt%-75 wt%, 75 wt%-80 wt%, 80 wt%-85 wt%, or 85 wt%-90 wt%, preferably, 30 wt%~60 wt%.

In some implementations of the present invention, a mass percentage of the polymer X in the protective layer may be 10 wt%-90 wt%, 40 wt%-90 wt%, 10 wt%~15 wt%, 15 wt%-20 wt%, 20 wt%-25 wt%, 25 wt%~30 wt%, 30 wt%-35 wt%, 35 wt%~40 wt%, 40 wt%~45 wt%, 45 wt%~50 wt%, 50 wt%-55 wt%, 55 wt%~60 wt%, 60 wt%-65 wt%, 65 wt%-70 wt%, 70 wt%-75 wt%, 75 wt%~80 wt%, 80 wt%~85 wt%, or 85 wt%-90 wt%, preferably, 40 wt%~70 wt%.

In the lithium metal battery provided in the present invention, to obtain a relatively high lithium ion conductivity, the protective layer needs to have sufficient lithium-ion transmission channels, that is, have a relatively large pore diameter and a relatively high porosity. However, a structure with many pores is adverse to mechanical strength of the protective layer. To form a protective film structure of an appropriate pore density, compatibility between different polymers and other technical parameters need to be considered during preparation of the protective layer.

In some implementations of the present invention, a pore diameter of the protective layer is 10 nm~100 nm, 100~500 nm, 500 nm-1 μm, 1 μm~5 μm, or 5 μm~10 μm, preferably, 500 nm~5 μm.

In some implementations not being part of the present invention, a porosity of the protective layer is 20%-30%, 30%-40%, 40%-50%, or 50%-70%, preferably, 30%-50%.

In some implementations of the present invention, an elastic modulus of the protective layer is 0.1 MPa~0.5 MPa, 0.5 MPa~1 MPa, 1 MPa~5 MPa, 5 MPa~10 MPa, 10 MPa~20 MPa, 20 MPa~40 MPa, 40 MPa~60 MPa, or 60 MPa ~80 MPa, preferably, 0.1 MPa~50 MPa.

In some implementations of the present invention, an elastic deformation range is 20%-500%, 20%-50%, 50%-100%, 100%-200%, 200%-300%, 300%-400%, or 400% -500%, preferably, 100%-300%.

In some implementations of the present invention, a thickness of the protective layer may be 500 nm-30 μm, preferably, 5~20 μm.

In the lithium metal battery provided in the present invention, the protective layer may also include a ceramic material that is configured to enhance mechanical strength and lithium-ion conductivity of the protective layer. A person skilled in the art may select an appropriate type and parameter of the ceramic material suitable for the lithium metal battery.

In some implementations of the present invention, the ceramic material may be, but without limitation, a combination of one or more of $Al_2O_3$, $SiO_2$, $TiO_2$, ZnO, ZrO, $BaTiO_3$, a metal-organic framework (MOF), a nano-iron trioxide, a nano-zinc oxide, a nano-zirconia, and the like.

In some implementations not being part of the present invention, a particle diameter of the ceramic material may be 2 nm~500 nm, 2 nm~10 nm, 10 nm~20 nm, 20 nm~40 nm, 40 nm~60 nm, 60 nm~80nm, 80 nm~100 nm, 100 nm~200 nm, 200 nm - 300 nm, 300 nm~400 nm, or 400 nm~500 nm.

In some implementations of the present invention, a weight percent of the ceramic material in the protective layer may be 1 wt%-30 wt%, 1 wt%-3 wt%, 3 wt%-5 wt%, 5 wt%-10 wt%, 10 wt%~ 15 wt%, 15 wt%-20 wt%, 20 wt%-25 wt%, or 25 wt%~30 wt%.

In some implementations of the present invention, after the protective layer of the polymer is adjusted, an ionic conductivity of the protective layer is ≥ $10^{-6}$ $Scm^{-1}$, preferably, ionic conductivity ≥ $10^{-4}$ S $cm^{-1}$.

In the lithium metal battery provided in the present invention, the protective layer can improve a deposition morphology of lithium dendrites of the lithium metal battery under a specific charge current density, and relieve volume expansion of the lithium metal negative electrode. That is because, when the battery is charged, electrons and ions complete transfer of substances and charges instantaneously at an anode interface, and the electrons move much faster than the ions. Therefore, the movement speed of the ions determines an upper-limit charge current density. If the charge current density is too low, a charging time will be too long, and an application scope of the battery is limited. Preferably, an applicable charge current density may be 0.3 mA/$cm^2$~12 mA /$cm^2$; more preferably, 1 mA/$cm^2$~6 mA/$cm^2$.

In some implementations not being part of the present invention, a charge current density applied may be 0.3 mA/$cm^2$~0.5 mA /$cm^2$, 0.5 mA/$cm^2$~1 mA /$cm^2$, 1 mA/$cm^2$~1.5 mA/$cm^2$, 1.5 mA/$cm^2$~2 mA/$cm^2$, 2 mA/$cm^2$~2.5 mA/$cm^2$, 2.5mA/$cm^2$~3mA/$cm^2$, 3 mA/$cm^2$~3.5 mA/$cm^2$, 3.5 mA/cm~4 mA/$cm^2$, 4 mA/$cm^2$~4.5 mA/$cm^2$, 4.5 mA/$cm^2$~5mA/$cm^2$, 5 mA/$cm^2$~5.5 mA/$cm^2$, 5.5 mA/$cm^2$~6 mA/$cm^2$, 6 mA/$cm^2$~8 mA/$cm^2$, 8 mA/$cm^2$~10 mA/$cm^2$, or 10 mA/$cm^2$~12 mA/$cm^2$.

In the lithium metal battery provided in the present invention, the positive electrode and the electrolyte may be any of various materials suitable for the lithium metal battery. For example, the positive electrode may be, but without limitation, a lithium cobalt oxide, a lithium nickel oxide, a lithium manganese oxide, a lithium nickel manganese oxide, a lithium nickel cobalt manganese oxide, a lithium nickel cobalt aluminum oxide, or an olivine-structured lithium-containing phosphate, or may be a conventional well-known material that can be used as a positive electrode active material of the battery. For another example, the electrolyte may be a liquid electrolyte, a gel electrolyte, a solid state electrolyte, or the like.

Generally, a person skilled in the art can choose an appropriate method to form the protective layer according to the structure of the lithium metal negative electrode. For example, the method chosen may be coating, spraying, spin coating, vapor deposition method, or the like.

In the method provided in the present invention for preparing the lithium metal battery, the protective layer provided may further include a ceramic material. Generally, the ceramic material may be homogeneously dispersed in a solution in a suspended manner, so as to homogeneously dispersed in the protective layer.

The following describes the implementation of the present invention with reference to specific embodiments. A person skilled in the art can easily understand other advantages and effects of the present invention from the content

disclosed in this specification. The present invention may also be implemented or applied in other different manners. From a perspective of different viewpoints and applications, details in this specification may be modified or changed without departing from the spirit of the present invention.

It needs to be noted that unless otherwise explicitly specified herein, process equipment or apparatuses mentioned in the following embodiments are conventional equipment or apparatuses in the art.

In addition, understandably, unless otherwise specified herein, a combination of one or more method steps mentioned in the present invention shall not preclude other method steps existent before or after the combination of steps, or preclude other method steps from being inserted between the explicitly mentioned steps. Further, understandably, unless otherwise specified herein, a combination or connection relationship between one or more devices/apparatuses mentioned herein shall not preclude other devices/apparatuses existent before or after the combined devices/apparatuses, or preclude other devices/apparatuses from being inserted between two devices/apparatuses explicitly mentioned herein.

**Embodiment 1**

Preparing a positive electrode plate: mixing $LiCoO_2$ as a positive electrode active material, acetylene black as a conductive agent, and PVDF as a binder at a mass ratio of 96:2:2; adding such materials into an N-methylpyrrolidone (NMP) solvent, and stirring the materials until the solvent system is in a homogeneous state and a positive electrode slurry is obtained; coating an aluminum foil of a positive electrode current collector homogeneously with the positive electrode slurry; drying the aluminum foil in the air under a room temperature, and relocating it to an oven for further drying; and then cutting the aluminum foil into a Φ14 mm disc serving as a positive electrode plate, with a surface capacity of the positive electrode being 3 $mAh/cm^2$.

Preparing a negative electrode plate:

(1) Preparing a polymer solution: using a polymer X that is a copolymer of a polymer Z and a polymer W, using styrene as a polymer Z whose molecular weight is 104 g/mol, and using poly(butyl acrylate) as the polymer W whose molecular weight is 128 g/mol;

using PVDF as a polymer Y whose molecular weight is 30 W;
physically mixing the polymer X with the polymer Y, where a mass percentage of the polymer Y in a protective layer is 75%, and a mass ratio of the polymer Z to the polymer W is 1:2;

(2) homogeneously coating a surface of a lithium metal foil 20 μm thick with the mixed solution obtained in step (1) to form a protective layer whose thickness is 5 μm, and then cutting the protective layer into a Φ16 mm disc serving as a negative electrode plate.

Preparing an electrolytic solution:

Slowly adding lithium hexafluorophosphate ($LiPF_6$) into a mixed solvent of ethylene carbonate (EC) and ethyl methyl carbonate (EMC) (with a volume ratio of the EC to the EMC being 1:1), so that an electrolytic solution is prepared in which a $LiPF_6$ concentration is 1 mol/L.

Preparing a separator:

Using a polypropylene film as a separator.

Preparing a battery:

Stacking the positive electrode plate, the separator, and the negative electrode plate sequentially so that the separator is located between the positive electrode plate and the negative electrode plate to serve a separation purpose, injecting the prepared electrolytic solution, and assembling them into a coin battery. Before the battery is tested, charging the lithium metal battery to 4.25 V using a constant current of 3.0 $mA/cm^2$, and then discharging the battery to 3.0 V using a constant current of 3.0 $mA/cm^2$.

Preparation methods in Embodiments 2~12 and Comparative Embodiments 1~5 are similar to those in Embodiment 1 except differences shown in Table 1.

**Table 1**

| Serial number | Polymer X | | | | | Polymer Y | | | Pore diam eter (µm) | For osit y (%) | Thick ness of the prote ctive layer (µm) | Charge curre nt densi ty of the batter Y (mA/ cm2) |
|---|---|---|---|---|---|---|---|---|---|---|---|---|
| | Typ e of the pol ymer Z/ W | Blendi ng mode of the polymers Z and W | Molecular weight of the poly mer Z | Mol ecul ar weight of the pol ym er W | Mass ratio of Z to W | Type of the polyme r Y | Mole cular weight of thepoly mer Y | Mass per cent age of the polym er Y (%) | | | | |
| Em bod ime nt 1 | PS/ PB A | Copol ymeriz ation | 4W | 6W | 1:1 | PVDF | 30W | 40 | 1 | 30 | 5 | 3 |
| Em bod ime nt 2 | PS/ PB A | Copol ymeriz ation | 20 W | 6W | 9:1 | PVDF | 30W | 40 | 1 | 20 | 0.5 | 3 |
| Em bod ime nt 3 | PS/ PB A | Copol ymeriz ation | 4W | 2W | 1:9 | PVDF | 30W | 40 | 1 | 30 | 10 | 3 |
| Em bod ime nt 4 | PS/ PB A | Copol ymeriz ation | 5K | 5K | 1:1 | PVDF | 10W | 10 | 5 | 50 | 10 | 3 |
| Em bod ime nt 5 | PS/ PB A | Copol ymeriz ation | 4W | 6W | 1:1 | PVDF | 100 W | 10 | 1 | 30 | 10 | 3 |
| Em bod ime nt 6 | PS/ PB A | Copol ymeriz ation | 100 W | 50 W | 1:1 | PVDF | 200 W | 90 | 0.01 | 20 | 30 | 3 |
| Em bod ime nt 7 | PS/ PB A | Copol ymeriz ation | 4W | 6W | 1:1 | PVDF | 30W | 30 | 1 | 30 | 10 | 0.3 |
| Em bod ime nt 8 | PS/ PB A | Copol ymeriz ation | 4W | 6W | 1:1 | PVDF | 30W | 40 | 5 | 20 | 5 | 6 |
| Em bod ime nt 9 | PS/ PB A | Copol ymeriz ation | 4W | 6W | 1:1 | PVDF | 30W | 60 | 10 | 70 | 10 | 12 |
| Em bod ime nt 10 | PS/ PB A | Copol ymeriz ation | 4W | 6W | 1:1 | PVDF-HFP | 30W | 40 | 1 | 30 | 5 | 3 |
| Em bod ime nt 11 | PS/ PE O | Copol ymeriz ation | 4W | 6W | 1:1 | PVDF | 30W | 40 | 1 | 30 | 5 | 3 |
| Em bod ime nt 12 | PS/ PB A | Blend | 4W | 6W | 1:1 | PVDF | 30W | 40 | 1 | 30 | 5 | 3 |

(continued)

| Serial number | Polymer X | | | | | Polymer Y | | | Pore diameter (μm) | Forosity (%) | Thickness of the protective layer (μm) | Charge current density of the batter Y (mA/cm2) |
|---|---|---|---|---|---|---|---|---|---|---|---|---|
| | Type of the polymer Z/W | Blending mode of the polymers Z and W | Molecular weight of the polymer Z | Molecular weight of the polymer W | Mass ratio of Z to W | Type of the polymer Y | Molecular weight of thepolymer Y | Mass percentage of the polymer Y (%) | | | | |
| Comparative Embodiment 1 | / | / | / | / | / | / | / | / | | | | |
| Comparative Embodiment 2 | / | / | / | / | / | PVDF | 30W | 100 | 1 | 30 | 5 | 3 |
| Comparative Embodiment 3 | PS | / | 4W | / | / | PVDF | 30W | 40 | 1 | 30 | 5 | 3 |
| Comparative Embodiment 4 | PBA | / | / | 6W | / | PVDF | 30W | 40 | 1 | 30 | 5 | 3 |
| Comparative Embodiment 5 | PBA | / | / | 6W | / | / | / | / | 1 | 30 | 5 | 3 |

The following describes a performance test of the lithium metal battery.

1. Testing protective layer parameters

Preparing a polymer layer solution: Preparing a solution of a polymer X: weighing out 1 g of the polymer X, adding it into an NMP solvent that weighs 9 g, and stirring the solvent until the polymer is dissolved. Preparing a solution of a polymer Z: weighing out 1 g of the polymer Y, adding it into an NMP solvent that weighs 9 g, and stirring the solvent until the polymer is dissolved. Preparing a polymer layer solution: weighing out the solution of the polymer X and the solution of the polymer Y at a specific percentage, mixing the solutions, and keeping stirring the solutions for 5 hours; scraping the foregoing polymer solution with a scraper and applying the solution onto a glass plate; and evaporating the glass plate under a 50 °C vacuum condition to remove the solvent so that a polymer film of a specific thickness is prepared.

(1) Ionic conductivity

Punching the polymer film into a Φ16 mm disc; soaking the polymer film disc in the electrolytic solution for 1 hour, and taking it out and wiping the electrolytic solution off the surface of the film with filter paper; and using a formula $\sigma = d/RA$ to calculate an ionic conductivity of the polymer film that has been swollen in the electrolytic solution, where d is a film thickness measured by a micrometer, A is a film area, and R is a film resistance. Using an electrochemical workstation to measure a resistance of a symmetric battery at a test frequency of $10^{-6}$~$10^{-1}$Hz and with a voltage amplitude of 5 mV An intersection of a Nyquist plot and a horizontal axis is the resistance R of the polymer film.

(2) Pore diameter and porosity

Using an automatic mercury porosimeter to test the pore diameter distribution and the porosity of the film, as detailed in Table 1.

(3) Elastic modulus and elastic deformation

Cutting the polymer film into a strip whose length $L_0$ is 50 mm and whose width is 20 mm. The elastic modulus of the polymer film is measured with a universal testing machine by applying a stretching distance of 50 mm and a stretching speed of 20 mm/min. A maximum tensile force value of the polymer film is the elastic modulus. Elastic deformation: Stretching the polymer film, and recording the length L of the polymer film when the film is stretched broken, so that the elastic deformation of the film can be calculated as $(L-L_0)/L_0 \times 100\%$.

2. Testing battery performance

(1) Testing cycle performance: initially charging a lithium metal battery to 4.25 V using a constant current, and then discharging the battery to 3.0 V to obtain a first-cycle specific discharge capacity (Cd1). Repeating the charge and discharge for 50 cycles. The specific discharge capacity of the lithium metal battery that has been circulated for n cycles is recorded as Cdn.

$$\text{Capacity retention rate} = \text{specific discharge capacity (Cdn) after n cycles/first-cycle specific discharge capacity (Cd1)} \times 100\%.$$

(2) Observing the surface of the lithium negative electrode: disassembling the battery when the battery is fully discharged at the end of the 50th cycle, and observing homogeneity of lithium deposition/dissolution and surface flatness of the lithium negative electrode under an optical microscope.

(3) Volume expansion rate of the electrode plate: assuming that a thickness of a fresh lithium plate is $d_1$; disassembling the battery when the battery is fully discharged at the end of the 50th cycle, and measuring the thickness of the lithium plate $d_2$ with an optical microscope. The volume expansion rate of the electrode plate is $(d_2-d_1)/d_1 \times 100\%$.

Detailed test results of Embodiments 1~12 and Comparative Embodiments 1-5 are shown in Table 2.

**Table 2**

| Serial number | Ionic conductivi ty of the protective layer (m S/cm) | Elastic modulus of the protective layer (MPa) | Deformati on of the protective layer (%) | Capacity retention rate after 50 cycles (%) | Lithium dendrites | Volume expansion rate (%) |
|---|---|---|---|---|---|---|
| Embodi ment 1 | 5.4 | 31 | 165 | 95 | None | 9 |
| Embodi ment 2 | 2.9 | 27 | 110 | 76 | Slight | 143 |
| Embodi ment 3 | 3.8 | 21 | 180 | 56 | Slight | 119 |
| Embodi ment 4 | 7.3 | 0.1 | 500 | 71 | Many | 134 |
| Embodi ment 5 | 4.7 | 29 | 300 | 94 | None | 11 |
| Embodi ment 6 | 0.2 | 80 | 20 | 45 | None | 23 |
| Embodi ment 7 | 5.8 | 28 | 190 | 98 | None | 5 |
| Embodi ment 8 | 5.8 | 39 | 268 | 93 | Slight | 34 |
| Embodi ment 9 | 6.3 | 23 | 174 | 75 | Slight | 53 |
| Embodi ment 10 | 6.6 | 30 | 160 | 95 | None | 13 |
| Embodi ment 11 | 7 | 28 | 246 | 93 | None | 14 |
| Embodi ment 12 | 3.4 | 23 | 145 | 90 | None | 18 |
| Compar ative Embodi ment 1 | / | / | / | 20 | Severe | 176 |
| Compar ative Embodi ment 2 | 0.05 | 85 | 50 | / | Severe | 132 |
| Compar ative Embodi ment 3 | 0.11 | 45 | 70 | 23 | Severe | 127 |
| Compar ative Embodi ment 4 | 0.15 | 51 | 90 | 23 | Severe | 116 |
| Compar ative Embodi ment 5 | 0.09 | 56 | 45 | 35 | Severe | 96 |

As can be seen from Table 2, as against Comparative Embodiment 1, with the lithium metal battery that includes the protective film disclosed in this patent (Embodiments 1~12, Comparative Embodiments 2-5), volume expansion of the lithium negative electrode is suppressed significantly after the lithium metal battery is circulated for many cycles, thereby helping the battery to maintain a good capacity retention rate.

As can be learned from comparison between Embodiments 1, 10-11 and Comparative Embodiments 2-5, different entanglement structures can be achieved by adjusting structures of different monomers in the protective film. The use of flexible groups (PEO, PVDF-HFP) helps to improve lithium-ion conductivity of the protective film.

As can be learned from comparison between Embodiment 1 and Embodiments 2-6, the molecular weight of a monomer structure and a corresponding dosage exert a great impact on mechanical properties of the polymer film. The polymer film with a low molecular weight improves elasticity of the film, but is prone to swell in a carbonate electrolytic solution, lacks homogeneity of lithium deposition, and gives rise to many lithium dendrites. When the molecular weight is relatively high, rigidity of the film is low, but the conductivity is low, thereby being adverse to charging and discharging with a large current of 3 $mA/cm^2$ or above. Consequently, polarization of the battery is significant and leads to rapid fading of capacity.

As can learned from comparison between Embodiment 1 and Embodiments 7~9, the film can exhibit different conductivities and mechanical strengths through adjustment of the pore diameter, porosity, and thickness of the film. Generally, a large pore diameter and a high porosity are conducive to rapid transfer of lithium ions (Embodiment 9), but reduce the mechanical strength of the film and are adverse to suppressing volume expansion of the lithium negative electrode.

As can be learned from comparison between Embodiment 1 and Embodiment 12, an entanglement structure that is conducive to lithium ion conduction can be more easily formed by a monomer copolymerization (Embodiment 1) system than by a monomer blending system (Embodiment 12). In addition, a copolymer film is of a higher strength and a higher deformability, and can effectively suppress dendrites and inhomogeneous lithium deposition.

In conclusion, through adjustment of a pore diameter, porosity, thickness, and the like of a protective layer film, the film can achieve a higher conductivity and a higher mechanical strength, thereby being conducive to applying the film to the lithium metal battery that is charged and discharged by using a high current density.

## Claims

1. A lithium metal battery, comprising a positive electrode, a negative electrode, and an electrolyte, wherein the negative electrode comprises a lithium metal and a protective layer located on at least a part of a surface of the lithium metal, the protective layer comprises a polymer X and a polymer Y, the polymer X comprises a polymer Z and a polymer W, the polymer Z is selected from one or more of polytetrafluoroethylene and a compound represented Formula I, the polymer W is selected from one or more of compounds represented by Formula II and Formula III, and the polymer Y is selected from one or more of polyvinylidene fluoride and polyvinylidene fluoride-hexafluoropropylene:

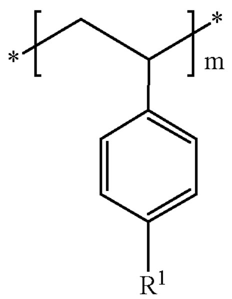

Formula I

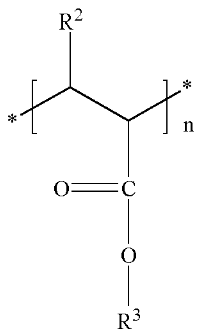

Formula II

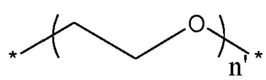

Formula III

wherein, $0 < m \leq 2500$, $0 < n \leq 5000$, $0 < n' \leq 5000$, $1:25 \leq 2m:n$ & 25:1, 1:25 & 2m:n' & 25:1;

$R^1$ is selected from H; branched or unbranched, saturated or unsaturated, substituted or unsubstituted C1-C20 aliphatic groups; saturated or unsaturated, substituted or unsubstituted C3-C9 cycloalkyls; $(C=O)OR^4$; $-SO_3R^4$; and $-PO_3R^4$; the cycloalkyls optionally comprise at least one heteroatom selected from S, N, P, and O as a ring member; $R^4$ is selected from H; branched or unbranched, saturated or unsaturated, substituted or unsubstituted C1-C20 aliphatic groups; and saturated or unsaturated, substituted or unsubstituted C3-C9 cycloalkyls; the cycloalkyls optionally comprise at least one heteroatom selected from S, N, P, and O as a ring member; in $R^1$

and $R^4$, substituents of the aliphatic groups and the cycloalkyls each are independently selected from C1-C6 alkyls; linear or branched C1-C6 alkoxies; F; Cl; I; Br; $CF_3$; $CH_2F$; $CHF_2$; CN; OH; SH; $NH_2$; oxo; (C=O)R'; SR'; SOR'; $SO_2R'$; NHR'; NR'R"; SiRR'R"; SiOR'R"; $(R'O)_2(P=O)$; $(R'O)_2(P=S)$; $(R'S)_2(P=O)'$; and BR'R", wherein R, R', and R" of the substituents each are independently selected from linear or branched $C_{1-6}$ alkyls;
$R^2$ is selected from H and a methyl; and
$R^3$ is selected from H; branched or unbranched, saturated or unsaturated, substituted or unsubstituted C1-C20 aliphatic groups; and saturated or unsaturated, substituted or unsubstituted C3-C9 cycloalkyls; the cycloalkyls optionally comprise at least one heteroatom selected from S, N, P, and O as a ring member; in $R^3$, substituents of the aliphatic groups and the cycloalkyls each are independently selected from an aryl; C1-C6 alkyls; linear or branched C1-C6 alkoxies; F; Cl; I; Br; $CF_3$; $CH_2F$; $CHF_2$; CN; OH; SH; $NH_2$; oxo; (C=O)R'; SR'; SOR'; $SO_2R'$; NHR'; NR'R"; SiRR'R"; SiOR'R"; $(R'O)_2(P=O)$; $(R'O)_2(P=S)$; $(R'S)_2(P=O)'$; and BR'R", wherein R, R', and R" of the substituents each are independently selected from linear or branched $C_{1-6}$ alkyls.

2. The lithium metal battery according to claim 1, wherein the polymer Z and the polymer W are polymer blends.

3. The lithium metal battery according to claim 1, wherein the polymer Z and the polymer W are copolymerized polymers; preferably, a structure of a copolymer of the polymer Z and the polymer W is selected from a combination of one or more of Poly(Z-c-W), Poly(Z-b-W), and Poly(Z-b-W-b-Z).

4. The lithium metal battery according to claim 1, wherein the polymer W isselected from a homopolymer or a copolymer formed by one or more of polyethylene oxide, polymethyl acrylate, polyethyl acrylate, poly(n-propyl acrylate), polyisopropyl acrylate, poly(n-butyl acrylate), polyisobutyl acrylate, poly(n-pentyl acrylate), and polymethyl methacrylate.

5. The lithium metal battery according to claim 1, wherein a mass ratio of the polymer W to the polymer Z is 1:9-9:1, preferably, 3:7~7:3; and/or

a mass percent of the polymer Y in the protective layer is 10 wt%-90 wt%, preferably, 30 wt%~60 wt%; and/or
a mass percent of the polymer X in the protective layer is 10 wt%-90 wt%, preferably, 40 wt%-70 wt%.

6. The lithium metal battery according to claim 1, wherein an elastic modulus of the protective layer is 0.1 MPa-80 MPa, preferably, 0.1 MPa-50 MPa; and/or
an elastic deformation range of the protective layer is 20%-500%, preferably, 100%-300%; wherein the measuring method of the elastic modulus and the elastic deformation range is described in the description.

7. The lithium metal battery according to claim 1, wherein a thickness of the protective layer is 500 nm~30 μm, preferably, 5~20 μm.

## Patentansprüche

1. Lithiummetallbatterie, umfassend eine positive Elektrode, eine negative Elektrode und einen Elektrolyten, wobei die negative Elektrode ein Lithiummetall und eine Schutzschicht umfasst, die sich auf mindestens einem Teil einer Oberfläche des Lithiummetalls befindet, wobei die Schutzschicht ein Polymer X und ein Polymer Y umfasst, wobei das Polymer X ein Polymer Z und ein Polymer W umfasst, das Polymer Z ausgewählt ist aus einem oder mehreren von Polytetrafluorethylen und einer Verbindung, die durch Formel I wiedergegeben wird, wobei das Polymer W ausgewählt ist aus einem oder mehreren der Verbindungen, die durch Formel II und Formel III wiedergegeben werden, und das Polymer Y ausgewählt ist aus einem oder mehreren von Polyvinylidenfluorid und Polyvinyliden-fluorid-Hexafluorpropylen:

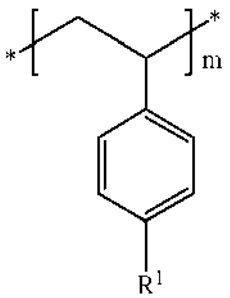
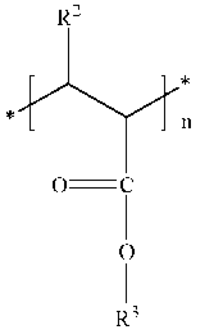
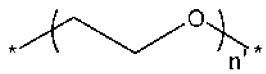

Formel I Formel II Formel III

wobei $0 < m \leq 2500$, $0 < n \leq 5000$, $0 < n' \leq 5000$, $1:25 \leq m:n \leq 25:1$, $1:25 \leq 2m:n' \leq 25:1$; $R^1$ ausgewählt ist aus H; verzweigten oder unverzweigten, gesättigten oder ungesättigten, substituierten oder unsubstituierten, aliphatischen $C_1$- bis $C_{20}$-Gruppen; gesättigten oder ungesättigten, substituierten oder unsubstituierten $C_3$- bis $C_9$-Cycloalkylen; (C=O)$OR^4$; - $SO_3R^4$ und -$PO_3R^4$; wobei die Cycloalkyle gegebenenfalls mindestens ein Heteroatom ausgewählt aus S, N, P und O als Ringelement umfassen; $R^4$ ausgewählt ist aus H; verzweigten oder unverzweigten, gesättigten oder ungesättigten, substituierten oder unsubstituierten, aliphatischen $C_1$- bis $C_{20}$-Gruppen; und gesättigten oder ungesättigten, substituierten oder unsubsituierten $C_3$- bis $C_9$-Cycloalkylen; wobei die Cycloalkyle gegebenenfalls mindestens ein Heteroatom ausgewählt aus S, N, P und O als Ringelement umfassen; in $R^1$ und $R^4$ Substituenten der aliphatischen Gruppen und der Cycloalkyle jeweils unabhängig ausgewählt sind aus $C_1$- bis $C_6$-Alkylen; linearen oder verzweigten $C_1$- bis $C_6$-Alkoxidgruppen; F; Cl; I; Br; $CF_3$; $CH_2F$; $CHF_2$; CN; OH; SH; $NH_2$; Oxo; (C=O)R'; SR'; SOR'; $SO_2R'$; NHR'; NR'R"; SiRR'R"; SiOR'R"; $(R'O)_2(P{=}O)$; $(R'O)_2(P{=}S)$; $(R'S)_2(P{=}O)'$ und BR'R", wobei R, R' und R" der Substituenten jeweils unabhängig ausgewählt sind aus linearen oder verzweigten $C_1$- bis $C_6$-Alkylen;

$R^2$ ausgewählt ist aus H und einem Methyl; und

$R^3$ ausgewählt ist aus H; verzweigten oder unverzweigten, gesättigten oder ungesättigten, substituierten oder unsubstituierten, aliphatischen $C_1$- bis $C_{20}$-Gruppen; und gesättigten oder ungesättigten, substituierten oder unsubstituierten $C_3$- bis $C_9$-Cycloalkylen; wobei die Cycloalkyle gegebenenfalls mindestens ein Heteroatom ausgewählt aus S, N, P und O als Ringelement umfassen; in $R^3$ Substituenten der aliphatischen Gruppen und der Cycloalkyle jeweils unabhängig ausgewählt sind aus einem Aryl; $C_1$- bis $C_6$-Alkylen; linearen oder verzweigten $C_1$- bis $C_6$-Alkoxygruppen; F; Cl; I; Br; $CF_3$; $CH_2F$; $CHF_2$; CN; OH; SH; $NH_2$; Oxo; (C=O)R'; SR; SOR'; $SO_2R'$; NHR'; NR'R"; SiRR'R"; SiOR'R"; $(R'O)_2(P{=}O)$; $(R'O)_2(P{=}S)$; $(R'S)_2(P{=}O)'$ und BR'R", wobei R, R' und R" der Substituenten jeweils unabhängig ausgewählt sind aus linearen oder verzweigten $C_1$- bis $C_6$-Alkylen.

**2.** Lithiummetallbatterie nach Anspruch 1, wobei das Polymer Z und das Polymer W Polymergemische sind.

**3.** Lithiummetallbatterie nach Anspruch 1, wobei das Polymer Z und das Polymer W copolymerisierte Polymere sind; wobei vorzugsweise eine Struktur eines Copolymers des Polymers Z und des Polymers W ausgewählt ist aus einer Kombination von einem oder mehreren von Poly(Z-c-W), Poly(Z-b-W) und Poly(Z-b-W-b-Z).

**4.** Lithiummetallbatterie nach Anspruch 1, wobei das Polymer W ausgewählt ist aus einem Homopolymer oder einem Copolymer, das durch ein oder mehrere von Polyethylenoxid, Polymethylacrylat, Polyethylacrylat, Poly(n-propylacrylat), Polyisopropylacrylat, Poly(n-butylacrylat), Polyisobutylacrylat, Poly(n-pentylacrylat) und Polymethylmethacrylat gebildet ist.

**5.** Lithiummetallbatterie nach Anspruch 1, wobei ein Massenverhältnis des Polymers W zu dem Polymer Z 1:9 bis 9:1, vorzugsweise 3:7 bis 7:3 ist; und/oder

ein Massenprozentsatz des Polymers Y in der Schutzschicht 10 Gew.% bis 90 Gew.%, vorzugsweise 30 Gew.% bis 60 Gew.% ist; und/oder

ein Massenprozentsatz des Polymers X in der Schutzschicht 10 Gew.% bis 90 Gew.%, vorzugsweise 40 Gew.% bis 70 Gew.% ist.

**6.** Lithiummetallbatterie nach Anspruch 1, wobei ein Elastizitätsmodul der Schutzschicht 0,1 MPa bis 80 MPa, vorzugsweise 0,1 MPa bis 50 MPa beträgt; und/oder

ein elastischer Verformungsbereich der Schutzschicht 20 % bis 500 %, vorzugsweise 100 % bis 300 % beträgt; wobei das Messverfahren des Elastizitätsmoduls und des elastischen Verformungsbereichs in den technischen Angaben beschrieben ist.

**7.** Lithiummetallbatterie nach Anspruch 1, wobei eine Dicke der Schutzschicht 500 nm bis 30 $\mu$m, vorzugsweise 5 bis 20 $\mu$m beträgt.

**Revendications**

**1.** Batterie au lithium métal, comprenant une électrode positive, une électrode négative, et un électrolyte, l'électrode négative comprenant un lithium métal et une couche protectrice située sur au moins une partie d'une surface du lithium métal, la couche protectrice comprenant un polymère X et un polymère Y, le polymère X comprenant un polymère Z et un polymère W, le polymère Z étant choisi parmi l'un ou plusieurs parmi un polytétrafluoroéthylène et un composé représenté par la formule I, le polymère W étant choisi parmi l'un ou plusieurs parmi des composés représentés par la formule II et la formule III, et le polymère Y étant choisi parmi l'un ou plusieurs parmi un poly(fluorure de vinylidène) et un poly(fluorure de vinylidène)-hexafluoropropylène :

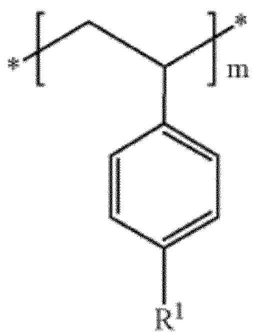
formule I

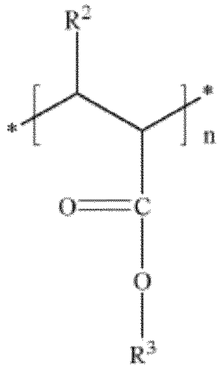
formule II

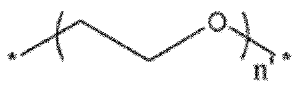
formule III

$0 < m \leq 2500$, $0 < n \leq 5000$, $0 < n' \leq 5000$, $1{:}25 \leq 2m{:}n \leq 25{:}1$, $1{:}25 \leq 2m{:}n' \leq 25{:}1$ ;

$R^1$ étant choisi parmi H ; des groupes aliphatiques en C1-C20 ramifiés ou non ramifiés, saturés ou non saturés, substitués ou non substitués ; des cycloalkyles en C3-C9 saturés ou non saturés, substitués ou non substitués ; $(C{=}O)OR^4$; $-SO_3R^4$; et-$PO_3R^4$; les cycloalkyles comprenant éventuellement au moins un hétéroatome choisi parmi S, N, P, et O en tant qu'élément de cycle ; $R^4$ étant choisi parmi H ; des groupes aliphatiques en C1-C20 ramifiés ou non ramifiés, saturés ou non saturés, substitués ou non substitués ; et des cycloalkyles en C3-C9 saturés ou non saturés, substitués ou non substitués ; les cycloalkyles comprenant éventuellement au moins un hétéroatome choisi parmi S, N, P, et O en tant qu'élément de cycle ; dans $R^1$ et $R^4$, des substituants des groupes aliphatiques et des cycloalkyles étant chacun indépendamment choisis parmi des alkyles en C1-C6 ; des alcoxy en C1-C6 linéaires ou ramifiés ; F ; Cl ; I ; Br ; $CF_3$ ; $CH_2F$ ; $CHF_2$ ; CN ; OH ; SH ; $NH_2$ ; oxo ; (C=O)R' ; SR' ; SOR' ; $SO_2R'$ ; NHR' ; NR'R" ; SiRR'R" ; SiOR'R" ; $(R'O)_2(P{=}O)$ ; $(R'O)_2(P{=}S)$ ; $(R'S)_2(P{=}O)'$ ; et BR'R", R, R', et R" des substituants étant chacun indépendamment choisis parmi des $C_{1-6}$ alkyles linéaires ou ramifiés ;

$R^2$ étant choisi parmi H et un méthyle ; et

$R^3$ étant choisi parmi H ; des groupes aliphatiques en C1-C20 ramifiés ou non ramifiés, saturés ou non saturés, substitués ou non substitués ; et des cycloalkyles en C3-C9 saturés ou non saturés, substitués ou non substitués ; les cycloalkyles comprenant éventuellement au moins un hétéroatome choisi parmi S, N, P, et O en tant qu'élément de cycle ; dans $R^3$, des substituants des groupes aliphatiques et des cycloalkyles étant chacun indépendamment choisis parmi un aryle ; des alkyles en C1-C6 ; des alcoxy en C1-C6 linéaires ou ramifiés ; F ; Cl ; I ; Br ; $CF_3$ ; $CH_2F$ ; $CHF_2$ ; CN ; OH ; SH ; $NH_2$ ; oxo ; (C=O)R' ; SR' ; SOR' ; $SO_2R'$ ; NHR' ; NR'R" ; SiRR'R" ; SiOR'R" ; $(R'O)_2(P{=}O)$ ; $(R'O)_2(P{=}S)$ ; $(R'S)_2(P{=}O)'$ ; et BR'R", R, R', et R" des substituants étant chacun indépendamment choisis parmi des $C_{1-6}$ alkyles linéaires ou ramifiés.

**2.** Batterie au lithium métal selon la revendication 1, le polymère Z et le polymère W étant des mélanges de polymères.

3. Batterie au lithium métal selon la revendication 1, le polymère Z et le polymère W étant des polymères copolymérisés ; préférablement, une structure d'un copolymère du polymère Z et du polymère W étant choisie parmi une combinaison d'un ou plusieurs parmi Poly(Z-c-W), Poly(Z-b-W), et Poly(Z-b-W-b-Z).

4. Batterie au lithium métal selon la revendication 1, le polymère W étant choisi parmi un homopolymère ou un copolymère formé par l'un ou plusieurs parmi un poly(oxyde d'éthylène), un poly(acrylate de méthyle), un poly(acrylate d'éthyle), un poly(acrylate de n-propyle), un poly(acrylate d'isopropyle), un poly(acrylate de n-butyle), un poly(acrylate d'isobutyle), un poly(acrylate de n-pentyle), et un poly(méthacrylate de méthyle).

5. Batterie au lithium métal selon la revendication 1, un rapport en masse du polymère W sur le polymère Z étant 1 : 9 à 9 : 1, préférablement, 3 : 7 à 7 : 3 ; et/ou

   un pourcentage en masse du polymère Y dans la couche protectrice étant de 10 % en poids à 90 % en poids, préférablement, de 30 % en poids à 60 % en poids ; et/ou
   un pourcentage en masse du polymère X dans la couche protectrice étant de 10 % en poids à 90 % en poids, préférablement, de 40 % en poids à 70 % en poids.

6. Batterie au lithium métal selon la revendication 1, un module élastique de la couche protectrice étant de 0,1 MPa à 80 MPa, préférablement, de 0,1 MPa à 50 MPa ; et/ou

   une plage de déformation élastique de la couche protectrice étant de 20 % à 500 %, préférablement, de 100 % à 300 % ;
   le procédé de mesure du module élastique et de la plage de déformation élastique étant décrit dans la description.

7. Batterie au lithium métal selon la revendication 1, une épaisseur de la couche protectrice étant de 500 nm à 30 μm, préférablement, de 5 à 20 μm.